# EUROPEAN PATENT SPECIFICATION

(11) **EP 3 336 826 B1**
(45) Date of publication and mention of the grant of the patent: **17.05.2023**
(21) Application number: 17203858.0
(22) Date of filing: 27.11.2017
(51) Int. Cl.: G08G 5/00, B64C 39/02, G01C 21/20, G05D 1/00

(54) **FLIGHT PLAN ANALYSIS SYSTEMS AND METHODS FOR UNMANNED AERIAL VEHICLES**
FLUGPLANANALYSESYSTEME UND -VERFAHREN FÜR UNBEMANNTE LUFTFAHRZEUGE
SYSTÈMES ET PROCÉDÉS D'ANALYSE DE PLAN DE VOL POUR VÉHICULES AÉRIENS SANS PILOTE

(30) Priority: 13.12.2016 US 201615377175
(43) Date of publication of application: 20.06.2018
(73) Proprietor: The Boeing Company, Arlington, VA 22202 (US)
(72) Inventor: CLARK, Jason W., Chicago, Illinois 60606-1596 (US); FERMON, Andres Chapiro, Chicago, Illinois 60606-1596 (US); PRICE, Matthew Robert, Chicago, Illinois 60606-1596 (US); HATZENBUEHLER, Jonas, Chicago, Illinois 60606-1596 (US)
(74) Representative: Hylarides, Paul Jacques

(56) References cited:
- WO-A1-2015/175440
- WO-A1-2016/130994
- US-A1- 2016 225 263

## Description

### FIELD OF THE DISCLOSURE

Embodiments of the present disclosure generally relate to systems and methods for analyzing a proposed flight plan for an unmanned aerial vehicle.

### BACKGROUND OF THE DISCLOSURE

In recent years, unmanned aerial vehicles (UAVs), such as aerial drones, have become available for commercial and private use. For example, certain businesses have started, or have considered, using aerial drones to deliver products to customers. An individual may order a product from a particular provider, and an aerial drone may deliver the product to the home of the individual. As such, delivery of goods to consumers is becoming quicker and more efficient due to the use of aerial drones.

Airspace above and surrounding various locations may be restricted for a variety of reasons. For example, a restricted airspace surrounding an airport may be used to ensure safe departures and arrivals at the airport. As another example, a no fly zone may be established with respect to various events (such as national sporting events, political rallies, and/or the like).

In many situations, before an individual is able to operate a UAV in a particular location, a flight plan for the UAV needs to be approved by an air traffic controller. Typically, an individual contacts the air traffic controller (via telephone) and informs the air traffic controller of the proposed flight plan. The air traffic controller then determines whether the flight plan may be approved. In some instances, the flight plan may not require approval by an air traffic controller, such as when a farmer requests a flight plan for a UAV related to crop dusting of land far away from a commercial airport or other restricted area. Nevertheless, through an abundance of caution, the operator of the UAV may contact the air traffic controller for such a flight plan request.

The process of approving a proposed flight plan for a UAV may last weeks, if not months. As can be appreciated, with the use of UAVs expanding, air traffic controllers may be overwhelmed with flight plan approval requests.

Patent document WO 2016/130994 A1, according to its abstract, states methods, systems, and apparatus, including computer programs encoded on computer storage media, for unmanned aerial vehicle (UAV) flight planning. One of the methods includes receiving a location for an aerial survey to be conducted by a UAV. One or more images depicting the location are obtained, and a geofence boundary to limit flight of the UAV is determined. A survey area is determined, and a flight data package is created for transmission that includes information describing a flight plan. After the flight plan is conducted, flight log data and sensor data are received. The flight log data and sensor data are processed, and at least a portion of the processed sensor data, is displayed.

### SUMMARY OF THE DISCLOSURE

A need exists for a system and method for efficiently analyzing flight plans for UAVs. A need exists for a system and method that are able to accommodate flight plan requests for an ever-increasing number of UAVs.

With those needs in mind, the present disclosure provides, according to a first claimed aspect, a flight control system comprising a flight plan analysis system configured to determine a flight plan decision regarding a proposed flight plan for an unmanned aerial vehicle (UAV). The flight plan analysis system includes a flight plan database that stores risk factor data, and a flight plan analysis unit communicatively coupled to the flight plan database. The flight plan analysis unit receives a proposed flight plan for the UAV and determines the flight plan decision based on an analysis of the proposed flight plan and the risk factor data.

The flight plan analysis unit approves the proposed flight plan when the analysis of the proposed flight plan and the risk factor data results in a risk metric that is below an approval threshold. In at least one embodiment, the flight plan database includes a high risk factor storage area that stores high risk factor data.

The flight plan analysis unit denies the proposed flight plan when the analysis of the proposed flight plan and the risk factor data results in a risk metric that is above a denial threshold. In at least one embodiment, the flight plan database includes a low risk factor storage area that stores low risk factor data.

The flight plan analysis unit refers the proposed flight plan for further review when the analysis of the proposed flight plan and the risk factor data results in a risk metric that is between an approval threshold and a denial threshold. In at least one embodiment, the flight plan database includes an intermediate risk factor storage area that stores intermediate risk factor data.

The risk factor data may include capabilities data of the UAV. The capabilities data may be stored in a specifications identifier of the UAV. The capabilities data may be received from the specification identifier by the flight plan analysis system.

The flight plan database may include a flight plan storage area that stores previous proposed flight options correlated with previous flight plan decisions.

The present disclosure also provides, according to a second claimed aspect, a flight plan analysis method that determines a flight plan decision regarding a proposed flight plan for an unmanned aerial vehicle (UAV). The flight plan analysis method includes storing risk factor data in a flight plan database, communicatively coupling a flight plan analysis unit to the flight plan database, receiving (by the flight plan analysis unit) a proposed flight plan for the UAV, analyzing (by the flight plan analysis unit) the proposed flight plan and the risk factor data, and determining (by the flight plan analysis unit) the flight plan decision based on the analyzing.

The present disclosure provides the flight control system, according to the first claimed aspect, that includes an unmanned aerial vehicle (UAV), and a flight plan input device that is preferably communicatively coupled to the UAV. The flight plan input device is configured to allow a proposed flight plan for the UAV to be entered. The flight plan analysis system is in communication with the flight input device. The flight plan analysis system determines a flight plan decision regarding the proposed flight plan for the UAV.

### BRIEF DESCRIPTION OF THE DRAWINGS

Figure 1 is a schematic block diagram of a flight plan analysis system in relation to an unmanned aerial vehicle (UAV), according to an embodiment of the present disclosure.
Figure 2 is a schematic block diagram of a UAV, according to an embodiment of the present disclosure.
Figure 3 is a schematic block diagram of a flight plan input device, according to an embodiment of the present disclosure.
Figure 4 is a diagrammatic representation of a top view of an example of an unmanned aerial vehicle, according to an embodiment of the present disclosure.
Figure 5 is a flow chart of a flight plan analysis method, according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition.

Embodiments of the present disclosure provide flight plan analysis systems and methods that analyze data regarding specification and flight parameters for an unmanned aerial vehicle (UAV). If air traffic control approval is required for a proposed flight plan of the UAV (such as due to airspace classification and current airspace usage level), the flight plan analysis system automatically requests approval. If air traffic control approval is not required, the flight is filed for reference. In at least one embodiment, the flight plan analysis system may be used with a geo-fence and/or ground defense system.

Embodiments of the present disclosure provide systems and methods that reduce air traffic control workload. The systems and methods also expedite controlled airspace flight approval for UAV users as well as control the usage of airspace in areas of high UAV or manned aircraft operations. Moreover, the systems and methods provide increased airspace safety as UAV use increases.

The flight plan analysis system provides a link between UAVs and air traffic control. In at least one embodiment, a UAV operator creates an account, which may be used to file and authorize flight plans in an expedited manner. The UAV operator may input UAV characteristics by scanning a specifications identifier, which may then be output to the flight plan analysis system. After flight plan characteristics of the UAV are sent to the flight plan analysis system, the UAV operator may select parameters of the flight. Based on the parameters that an UAV operator selects, the proposed flight plan for the UAV may be either immediately approved, returned to the user with contact information requesting more detail, or denied. The flight plan analysis system may also store previous flights, authorize recurring flights, modify approval parameters subsequent and recurring flights as a result of temporary flight restrictions, and offer a suite of flight programs and tools that may assist with planning and management.

As noted, the UAV may include a specifications identifier, which may store various characteristics of the UAV. The stored characteristics may include a maximum range of the UAV, a maximum range of a remote control device of the UAV, a maximum flight time, a fail-safe procedure when the UAV reaches an end of a control range, a maximum speed, a maximum payload, a weight of the UAV, a camera type, and/or the like. Flight parameters for the UAV may include a duration of a flight, time of flight, purpose of flight, location of the flight, payload, and/or the like.

The flight plan analysis system may be configured to approve a flight plan for a smaller geo-fence around a UAV, track and store previous flights of a UAV, approve flight plans based on various parameters, conditionally approve a flight plan, approve a flight plan in an expedited manner, provide recurring flight plan approvals, and/or the like. During times in which there is an increase in flight requests, flight times and ranges may be modified

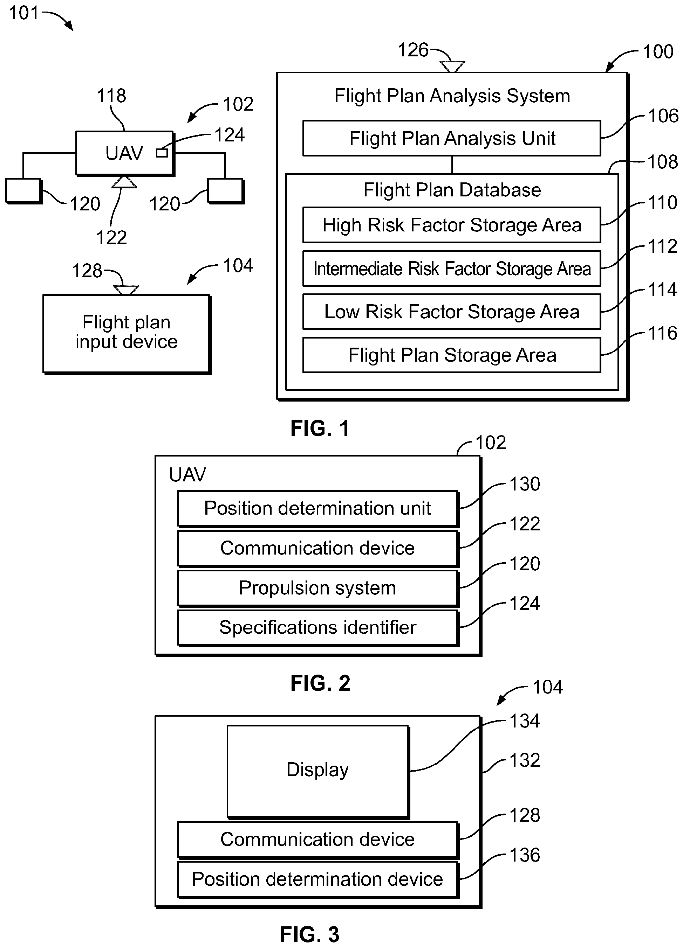

Figure 1 is a schematic block diagram of a flight plan analysis system 100 in relation to an unmanned aerial vehicle (UAV) 102, according to an embodiment of the present disclosure. Figure 1 shows a flight control system 101 that includes the flight plan analysis system 100, the UAV 102, and a flight plan input device 104. The flight plan analysis system 100 includes a flight plan analysis unit 106 communicatively coupled to a flight plan database 108, such as through one or more wired or wireless connections. In at least one embodiment, the flight plan database 108 may be part of the flight plan analysis unit 106. The flight plan database 108 may include a high risk factor storage area 110, an intermediate risk factor storage area 112, a low risk factor storage area 114, and a flight plan storage area 116. In at least one other embodiment, the flight plan database 108 may include a single storage area that stores data related to various risk factors, whether high, intermediate, or low.

The high risk factor storage area 110 stores high risk factor data. The high risk factors may be determined by an aviation authority (such as the Federal Aviation Administration), for example. The high risk factor data relates to various parameters that lead away from flight plan approval in a particular airspace. The high risk factor data may be correlated with a size of a UAV, use of a UAV, time of use, capabilities, and location of a UAV. The size of a UAV may be directly related to its use within a particular airspace. A larger UAV may pose a higher risk than a smaller UAV. As an example, a large fixed wing UAV poses a greater damage risk than a smaller UAV (such as in the event of a crash). Further, various uses of the UAV may pose high risks, such as video monitoring of an airfield, use within a military location, use during times of increased levels of aircraft flight within an airspace, and/or the like. As another example, a time of use of the UAV may pose a high risk, such as use over a location during a sporting event with numerous spectators. In general, a proposed flight plan of a UAV that includes at least some high risk factors may cause a flight plan to be rejected or otherwise denied. The number of high risk factors may be continually updated, and may be almost limitless. The high risk factor data may be input and/or downloaded into the flight plan database 106.

The intermediate risk factor storage area 112 stores intermediate risk factor data. The intermediate risk factors may be determined by an aviation authority (such as the Federal Aviation Administration), for example. The intermediate risk factor data relates to various parameters that may require further analysis by air traffic control in order for a flight plan to be approved. Like the high risk factor data, the intermediate risk factor data may be correlated with a size of a UAV, use of a UAV, time of use, capabilities, and location of a UAV. As mentioned, the size of a UAV may be directly related to its use within a particular airspace. A small UAV may be deemed an intermediate risk during a particular time of day for a particular use, in contrast to a larger UAV, which may be deemed a high risk for the same use during the same time of day. Further, various uses of the UAV may pose intermediate risks, such as product delivery to a location that is proximate to an airfield. In general, a proposed flight plan of a UAV that includes at least some intermediate risk factors may cause a flight plan to be sent to air traffic control for further review. The number of intermediate risk factors may be continually updated, and may be almost limitless. The intermediate risk factor data may be input and/or downloaded into the flight plan database 108.

The low risk factor storage area 114 stores low risk factor data. The low risk factors may be determined by an aviation authority (such as the Federal Aviation Administration), for example. The low risk factor data relates to various parameters that may result in instant flight plan approval. Like the high and intermediate risk factor data, the low risk factor data may be correlated with a size of a UAV, use of a UAV, time of use, capabilities, and location of a UAV. A small UAV may be deemed a low risk during a particular time of day for a particular use. Further, various uses of the UAV may pose low risks, such as crop dusting of a farm field. In general, a proposed flight plan of a UAV that includes low risk factors may be quickly approved. The number of low risk factors may be continually updated, and may be almost limitless. The low risk factor data may be input and/or downloaded into the flight plan database 108.

The flight plan storage area 116 may store flight plan data that relates to previous flights of a particular UAV. Based on previous flight plan data, a decision regarding a flight plan request may be quickly determined. For example, a recurring flight plan that is the same as previous flight plans (which are stored in the flight plan storage area 116) may be analyzed in the same fashion as the previous flight plan(s).

The UAV 102 includes an airframe 118 coupled to at least one propulsion system 120. The UAV 102 also includes a communication device 122, such as an antenna, transceiver, and/or the like, that allows the UAV 102 to be in communication with the flight plan input device 104 and/or the flight plan analysis system 100. The propulsion system 120 may include one or more propellers, rotors, and/or the like. In at least one embodiment, the propulsion system 120 is configured to propel the UAV 102 akin to a helicopter. In at least one other embodiment, the propulsion system 120 is configured to propel the UAV 102 akin to an airplane.

In at least one embodiment, the UAV 102 may also include a specifications identifier 124 that includes the capabilities data for the UAV 102. The specifications identifier 124 may be in the form of a tag, such as a near field communications (NFC) tag, a Bluetooth-enabled tag, an RFID tag, and/or the like. The capabilities data stored on the specifications identifier 124 may be wirelessly communicated to the flight plan analysis system 100 and stored within the flight plan storage area 116, such as after an individual purchases the UAV 102. In such an embodiment, the individual may scan the specifications identifier 124, such as with a smart device, at which point the capabilities data stored within the specification identifier 124 is output to the flight plan analysis system 100, which may receive the capabilities data via a communication device 126, such as an antenna, transceiver, Internet connection, and/or the like. In at least one other embodiment, the UAV 102 may not include the specifications identifier 124.

The flight plan input device 104 includes a communication device 128 that communicatively couples the flight plan input device 104 to the UAV 102 and the flight plan analysis system 100. In at least one embodiment, the flight plan input device 104 is a handheld smart device, such as a smart phone or tablet, a personal or laptop computer, and/or the like. In at least one other embodiment, the flight plan input device 104 is a dedicated control device that is specifically designed to control operation of the UAV 102.

The flight plan analysis system 100 is separate, and preferably distinct and remote, from the flight plan input device 104. For example, the flight plan analysis system 100 may be located at a first location that is separate and distinct from the remote flight plan input device 104. The flight plan input device 104 and the flight plan analysis system 100 may wirelessly communicate with one other, such as via the communication devices 126 and 128. In at least one embodiment, the flight plan input device 104 may communicate with the flight plan analysis system 100 through a mutual Internet connection.

In operation, the flight plan input device 104 may output the capabilities data of the UAV 102 that is stored on the specifications identifier 124 to the flight plan analysis system 100. For example, the flight plan input device 104 may scan the specifications identifier 124, and output the information stored therein to the flight plan analysis system 100. The specifications identifier 124 stores various characteristics of the UAV 102. The stored characteristics may include a maximum range of the UAV 102, a maximum range of the flight plan input device 104 in relation to the UAV 102, a maximum flight time of the UAV 102, a fail-safe procedure when the UAV 102 reaches an end of a control range, a maximum speed of the UAV 102, a maximum payload of the UAV 102, a weight of the UAV 102, a camera type, and/or the like. The capabilities data of the UAV 102 may be stored in the flight plan storage area 116.

Next, an individual may submit a proposed flight plan for the UAV 104 to the flight plan analysis system 100 via the flight plan input device 104. The proposed flight plan includes numerous parameters, such as purpose of flight, time of flight, capabilities of the UAV 102 (which may be output to the flight plan analysis system through the scanned specifications identifier 124), proposed area of flight, and/or the like. The flight plan analysis unit 106 analyzes the proposed flight plan in relation to the various risk factors stored in the flight plan database 108. In particular, the flight plan analysis unit 106 compares the various parameters of the proposed flight plan output through the flight plan input device 104 with the stored risk factors in the flight plan database 108, and generates a flight plan decision based on the comparison. The flight plan decision denies the proposed flight plan, refers the proposed flight plan to air traffic control for further approval, or approves the proposed flight plan.

If the proposed flight plan includes one or more high risk factors, as stored as high risk factor data in the high risk factor storage area 110, the flight plan analysis unit 106 may output a flight plan denial to the flight plan input device 104. For example, the proposed flight plan may include a flight plan over a restricted airspace, which precludes UAV flights. In this case, the flight plan analysis unit 106 may immediately issue a flight plan denial to the flight plan input device 104.

If the proposed flight plan includes one or more intermediate risk factors, as stored as intermediate risk factor data in the intermediate risk factor storage area 112, the flight plan analysis unit 106 may submit the proposed flight plan to air traffic control for approval. In this scenario, the flight plan analysis unit 106 neither approves, nor denies the proposed plan flight. Rather, the flight plan analysis unit 106 determines that, based on a comparison of the proposed flight plan with the various risk factors stored in the flight plan database 108, an individual air traffic controller needs to further analyze the proposed flight plan. For example, the proposed flight plan may be similar to an otherwise high risk flight plan, but the UAV 102 may be subject to a geo-fence that limits a range of the UAV 102 within a particular area. The limited range may downgrade the proposed flight plan from a high risk to an intermediate risk flight plan.

If the proposed flight plan includes low risk factors, as stored as low risk factor data in the low risk factor storage area 114, the flight plan analysis unit 106 may immediately output a flight plan approval message to the flight input device 104, thereby approving the proposed flight plan without the need to contact air traffic control. In at least one embodiment, an otherwise intermediate risk proposed flight plan may be downgraded to a low risk flight plan based on a reduced range, size, payload, and/or the like of the UAV 102. For example, the UAV 102 may be subject to a geo-fence that restricts movement into a particular restricted airspace, which allows the proposed flight plan to be approved.

In at least one embodiment, the flight plan analysis unit 106 compares the proposed flight plan of the UAV 102 (as output by the flight plan input device 104) to determine a risk metric for the proposed flight plan. The flight plan analysis unit 106 analyzes the various parameters of the proposed flight plan (including the location of the proposed flight, time of the proposed flight, purpose of the proposed flight, capabilities of the UAV 102, whether the UAV 102 is geo-fenced, and/or the like). The flight plan analysis unit 106 compares the parameters of the proposed flight plan with the risk factor data stored in the flight plan database 108. Each particular parameter may be assigned a particular risk score. For example, low risk factors may include a low risk weighting, while high risk factors may include a high risk weighting. In at least one embodiment, any high risk factor may cause the flight plan analysis unit 106 to issue an immediate denial of the proposed flight plan.

If the total risk score is below an approval threshold (which may be stored in the flight plan database 108 and/or otherwise programmed into the flight plan analysis unit 106), the flight plan analysis unit outputs a flight plan approval signal, which is output to the flight plan input device 104. If the total risk score is above the approval threshold, and below a denial threshold (which may also be stored in the flight plan database 108 and/or otherwise programmed into the flight plan analysis unit 106), the flight plan analysis unit 106 outputs a flight plan referral signal to an air traffic controller. The flight plan referral signal neither immediately approves nor denies the proposed flight plan, but rather refers the proposed flight plan to an air traffic controller. The flight plan referral signal may be output to the flight plan input device 104, which advises the operator of the UAV to contact the air traffic controller and provide additional information. The air traffic controller then approves or denies the proposed flight plan. If the total risk score is above the denial threshold, the flight plan analysis unit 106 may output a flight plan denial signal to the flight plan input device 104. The flight plan denial signal is received by the flight plan input device 104, and denies the proposed flight plan without contacting the air traffic controller.

The proposed flight plans for the UAV 102 may be stored in the flight plan storage area 116 of the flight plan database 108. The flight plan analysis unit 106 correlates each stored proposed flight plan with a flight plan decision (for example, denial, referral to air traffic control, or denial) for the proposed flight plan. In this manner, an operator of the UAV 102 may simply resubmit a proposed flight plan that is the same as a previously-submitted proposed flight plan, and the flight plan analysis unit 106 may compare the resubmitted proposed flight plan and issue a flight plan decision in the same manner as with respect to the previously-stored proposed flight plan.

As described, the operator of the UAV 102 submits a proposed flight plan through the flight plan input device 104. The flight plan analysis unit 106 receives the proposed flight plan from the flight plan input device 104. The flight plan analysis unit 106 analyzes the proposed flight plan, such as by comparing various parameters of the proposed flight plan with risk factor data stored in the flight plan database 108. If the flight plan analysis unit 106 approves the proposed flight plan, the flight plan analysis unit 106 outputs a flight plan approval signal to the flight plan input device 104 indicating that the proposed flight plan is approved. The proposed flight plan may then be stored in the flight plan storage area 116. The flight plan analysis unit 106 may also output the proposed flight plan to an aviation authority, such as the Federal Aviation Administration (FAA), for filing. If, however, the flight plan analysis unit 106 denies the proposed flight plan, the flight plan analysis unit 106 outputs a flight plan denial signal to the flight plan input device 104 indicating that the proposed flight plan is denied. If, however, the flight plan analysis unit is neither able to approve, nor deny the proposed flight plan, the flight plan analysis unit 106 outputs a flight plan referral signal to the flight plan input device 104.

As used herein, the term "control unit," "unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the flight plan analysis unit 106 may be or include one or more processors that are configured to control operation of the flight plan analysis system 100.

The flight plan analysis unit 106 is configured to execute a set of instructions that are stored in one or more storage elements (such as one or more memories), in order to process data. For example, the flight plan analysis unit 106 may include or be coupled to one or more memories. The storage elements may also store data or other information as desired or needed. The storage elements may be in the form of an information source or a physical memory element within a processing machine.

The set of instructions may include various commands that instruct the flight plan analysis unit 106 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein may illustrate one or more control or processing units, such as the flight plan analysis unit 106. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, EPROM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the flight plan analysis unit 106 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in memory for execution by a computer, including RAM memory, ROM memory, EPROM memory, EEPROM memory, OTP (one time programmable) memory, and nonvolatile RAM (NVRAM) memory. The above memory types are exemplary only, and are thus not limiting as to the types of memory usable for storage of a computer program.

Figure 2 is a schematic block diagram of the UAV 102, according to an embodiment of the present disclosure. The UAV 102 includes the propulsion system(s) 120 and the communication device 122, as described above. The UAV 102 may also include the specifications identifier 124. Optionally, the UAV 102 may not include the specifications identifier 124.

The UAV 102 may also include a position determination device 130, such as a GPS unit, a position triangulation unit, and/or the like. The position determination device 130 determines a current location of the UAV 102 and outputs a position signal, which may then be received by the flight plan input device 104 and/or the flight plan analysis system 100 (shown in Figure 1). Optionally, the UAV 102 may not include the position determination device 130.

Figure 3 is a schematic block diagram of the flight plan input device 104, according to an embodiment of the present disclosure. As shown in Figure 3, the flight plan input device 104 may be a handheld smart device, such as a smart phone or tablet, having a handheld housing 132. The communication device 128 may be within the housing 132. A display 134, such as a touchscreen display, is coupled to the housing 132. The flight plan input device 104 may also include a position determination device 136, such as a GPS unit, a position triangulation unit, and/or the like. The flight plan input device 104 is configured to allow an individual enter a proposed flight plan, which is then output to the flight plan analysis system 100 (shown in Figure 1). In at least one embodiment, the flight plan input device 104 is also configured to control operation of the UAV 102 (shown in Figures 1 and 2).

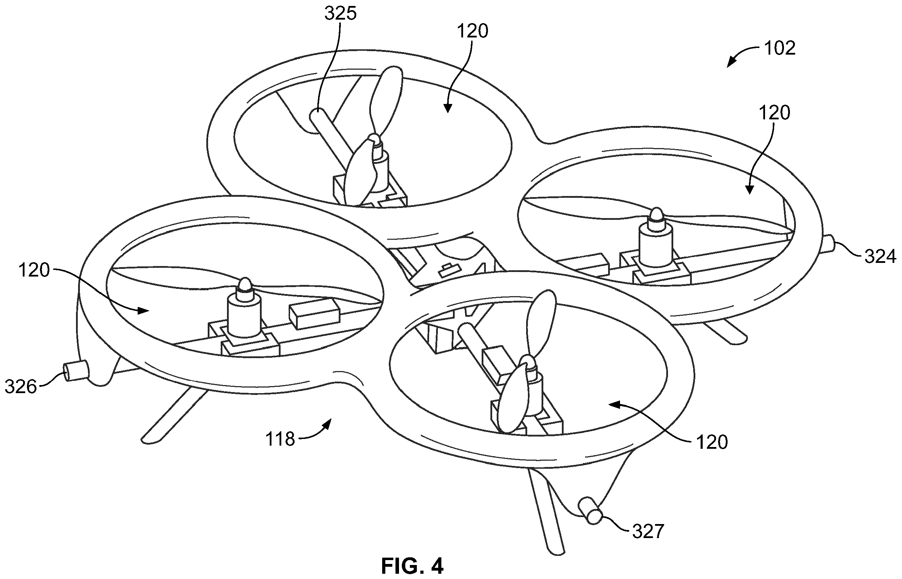

Figure 4 is a diagrammatic representation of a top view of an example of a UAV 102 according to an embodiment of the present disclosure. As shown in Figure 4, the UAV 102 may include an airframe 118 and a plurality of propulsion systems 120 coupled to the airframe 118. In general, the airframe 118 forms the structural body or framework for the UAV 102. In the illustrated embodiment shown in Figure 4, the UAV 102 includes four propulsion systems 120, such that each propulsion system 120 is mounted to a respective arm 324, 325, 326, and 327. In the illustrated embodiment, the UAV 102 includes four arms 324-327 and a single propulsion system 120 that is mounted to each respective arm 324-327. Optionally, the UAV 102 may include more or less propulsion systems 120, more or less propulsion systems 120 per arm 324-327, and more or less arms 324-327 than shown.

Also, optionally, instead of the UAV shown in Figure 4, the UAV 102 may be include a fuselage, wings, a tail, and the like. In this manner, the UAV 102 may be designed as an unmanned airplane.

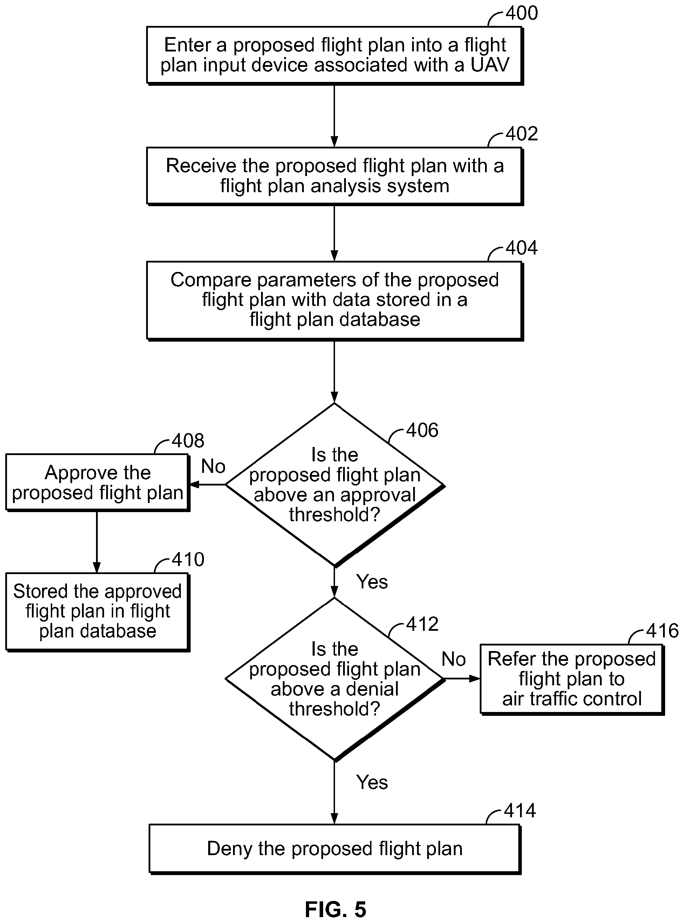

Figure 5 is a flow chart of a flight plan analysis method, according to an embodiment of the present disclosure. Referring to Figures 1 and 5, the method begins at 400, at which a proposed flight plan is entered into the flight plan input device 104 that is associated with the UAV 102. At 402, the flight plan analysis system 100 receives the proposed flight plan from the flight plan input device 104, such as through one or more wired or wireless signals. In at least one embodiment, the proposed flight plan may be provided directly to the flight plan analysis system 100, such as via a desktop or laptop computer.

At 404, the flight plan analysis unit 106 compares various parameters of the proposed flight plan with data stored in the flight plan database 108. The parameters may include the type of UAV, the weight of the UAV, the payload carried by the UAV, whether or not the UAV carries a camera, the type of such camera, a maximum speed of the UAV, a maximum range of the UAV, the purpose of the flight, the departure time of the flight, the length of time of the flight, whether or not the UAV is subject to a geo fence, and/or the like.

At 406, the flight plan analysis unit 106 determines if the proposed flight plan is above (or, optionally, below) an approval threshold. The determination may be made based on a comparison of the parameters and a risk metric of the proposed flight plan. If the proposed flight plan is below (or, optionally, above) the approval threshold, the flight plan analysis unit 408 approves the proposed flight plan at 408, and the approved flight plan may then be stored in the flight plan database 108 at 410.

If, however, the proposed flight plan is above the approval threshold at 406, the flight plan analysis unit 106 then determines whether the proposed flight plan is above a denial threshold at 412. If the proposed flight plan is above the denial threshold at 412, the flight plan analysis unit 106 denies the proposed flight plan at 414.

If, however, the proposed flight plan is below the denial threshold at 412, the flight plan analysis unit 106 refers the proposed flight plan to air traffic control at 416. Air traffic control then determines whether or not to approve or deny the proposed flight plan.

Embodiments of the present disclosure provide systems and methods that allow large amounts of data to be quickly and efficiently analyzed by a computing device. For example, as noted, a proposed flight plan may include hundreds if not thousands of different parameters to consider. The vast amounts of data are efficiently organized and/or analyzed by the flight plan analysis system 100, as described above. The flight plan analysis unit 106 analyzes the data in a relatively short time in order to generate a decision regarding the proposed flight plan. A human being would be incapable of analyzing such vast amounts of data in a time that allows for a quick and efficient decision regarding a proposed flight plan. As such, embodiments of the present disclosure provide increased and efficient functionality, and vastly superior performance in relation to a human being analyzing the enormous amounts of data. In short, embodiments of the present disclosure provide systems and methods that analyze thousands, if not millions, of calculations and computations that a human being is incapable of efficiently, effectively, and accurately managing.

As described above, embodiments of the present disclosure provide systems and methods for efficiently analyzing proposed flight plans for UAVs. Embodiments of the present disclosure provide systems and methods that accommodate flight plan requests for an ever-increasing number of UAVs. The flight plan analysis systems and methods are configured to quickly and efficiently approve or deny certain types of proposed flight plans without requiring air traffic control to be consulted. As such, the resources of air traffic control may be more efficiently utilized.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical (or various other angles or orientations), and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and may include other examples that occur to those skilled in the art.

## Claims

1. A flight control system (101), comprising:
an unmanned aerial vehicle, UAV (102);
a flight plan input device (104); and
a flight plan analysis system (100), separate from the flight plan input device (104), configured to determine a flight plan decision regarding a proposed flight plan for the UAV (102), the flight plan analysis system (100) comprising:
a flight plan database (108) that stores risk factor data; and
a flight plan analysis unit (106) communicatively coupled to the flight plan database (108), wherein the flight plan analysis unit (106) receives a proposed flight plan for the UAV (102) from the flight plan input device (104), and determines the flight plan decision based on an analysis of the proposed flight plan and the risk factor data, wherein
the flight plan analysis unit (106) immediately approves the proposed flight plan and outputs a flight plan approval signal to the flight plan input device (104) when the analysis of the proposed flight plan and the risk factor data results in a risk metric that is below an approval threshold,
the flight plan analysis unit (106) immediately denies the proposed flight plan and outputs a flight plan denial signal to the flight plan input device (104) when the analysis of the proposed flight plan and the risk factor data results in a risk metric that is above a denial threshold, and
the flight plan analysis unit (106) immediately refers the proposed flight plan for further review and outputs a flight plan referral signal to an air traffic controller when the analysis of the proposed flight plan and the risk factor data results in a risk metric that is above an approval threshold and below a denial threshold.

2. The flight control system (101) of claim 1, wherein the flight plan database (108) includes a high risk factor storage area (110) that stores high risk factor data.

3. The flight control system (101) of any one of claims 1-2, wherein the flight plan database (108) includes a low risk factor storage area (114) that stores low risk factor data.

4. The flight control system (101) of any one of claims 1-3, wherein the flight plan database (108) includes an intermediate risk factor storage area (112) that stores intermediate risk factor data.

5. The flight control system (101) of any one of claims 1-4, wherein the flight plan database (108) stores the risk factor data including capabilities data of the UAV (102).

6. The flight control system (101) of claim 5, wherein the capabilities data is stored in a specifications identifier of the UAV, and wherein the capabilities data is received from the specification identifier by the flight plan analysis system.

7. The flight control system (101) of claim 6, wherein the specifications identifier is in the form of a tag, such as a near field communications, NFC, tag, a Bluetooth-enabled tag, and/or an RFID tag.

8. The flight control system (101) of any one of claims 1-7, wherein the flight plan database (108) includes a flight plan storage area (116) that stores previous proposed flight options correlated with previous flight plan decisions.

9. The flight control system (101) of claim 8, wherein capabilities data of the UAV (102) is stored in the flight plan storage area (116).

10. A flight plan analysis method that determines a flight plan decision regarding a proposed flight plan for an unmanned aerial vehicle (UAV) (102), the flight plan analysis method comprising:
storing risk factor data in a flight plan database (108);
communicatively coupling a flight plan analysis unit (106) to the flight plan database (108);
receiving, from a separate flight plan input device (104) and by the flight plan analysis unit (106), a proposed flight plan for the UAV (102);
analyzing, by the flight plan analysis unit (106), the proposed flight plan and the risk factor data; and
determining, by the flight plan analysis unit (106), the flight plan decision based on the analyzing, wherein
the determining comprises:
immediately approving the proposed flight plan and outputting a flight plan approval signal to the flight plan input device (104) when the analyzing results in a risk metric that is below an approval threshold,
immediately denying the proposed flight plan and outputting a flight plan denial signal to the flight plan input device (104) when the analyzing results in a risk metric that is above a denial threshold, and
immediately referring the proposed flight plan for further review and outputting a flight plan referral signal to an air traffic controller when the analysis of the proposed flight plan and the risk factor data results in a risk metric that is above an approval threshold and below a denial threshold.

11. The flight plan analysis method of claim 10, wherein the storing comprises storing high risk factor data in a high risk factor storage area (110) of the flight plan database (108).

12. The flight plan analysis method of any one of claims 10-11, wherein the storing comprises storing low risk factor data in a low risk factor storage area (114) of the flight plan database (108).

13. The flight plan analysis method of any one of claims 10-12, wherein the storing comprises storing capabilities data of the UAV (102).

14. The flight plan analysis method of any one of claims 10-13, further comprising storing previous proposed flight options correlated with previous flight plan decisions within the flight plan database.

15. The flight plan analysis method of any one of claims 10-14, wherein the storing comprises storing intermediate risk factor data in an intermediate risk factor storage area (112) of the flight plan database (108).

## Patentansprüche

1. Flugsteuerungssystem (101), das Folgendes umfasst:
ein unbemanntes Luftfahrzeug (UAV, Unmanned Aerial Vehicle) (102);
eine Flugplaneingabevorrichtung (104); und
ein Flugplananalysesystem (100), das von der Flugplaneingabevorrichtung (104) getrennt ist und dazu konfiguriert ist, eine Flugplanentscheidung bezüglich eines vorgeschlagenen Flugplans für das UAV (102) zu bestimmen, wobei das Flugplananalysesystem (100) Folgendes umfasst:
eine Flugplandatenbank (108), in der Risikofaktordaten gespeichert sind; und
eine Flugplananalyseeinheit (106), die kommunikativ mit der Flugplandatenbank (108) gekoppelt ist, wobei die Flugplananalyseeinheit (106) aus der Flugplaneingabevorrichtung (104) einen vorgeschlagenen Flugplan für das UAV (102) empfängt und die Flugplanentscheidung basierend auf einer Analyse des vorgeschlagenen Flugplans und der Risikofaktordaten bestimmt, wobei
die Flugplananalyseeinheit (106) den vorgeschlagenen Flugplan sofort genehmigt und ein Flugplangenehmigungssignal an die Flugplaneingabevorrichtung (104) ausgibt, wenn die Analyse des vorgeschlagenen Flugplans und der Risikofaktordaten zu einer Risikometrik führt, die unterhalb einer Genehmigungsschwelle liegt,
die Flugplananalyseeinheit (106) den vorgeschlagenen Flugplan sofort ablehnt und ein Flugplanablehnungssignal an die Flugplaneingabevorrichtung (104) ausgibt, wenn die Analyse des vorgeschlagenen Flugplans und der Risikofaktordaten zu einer Risikometrik führt, die oberhalb einer Genehmigungsschwelle liegt, und
die Flugplananalyseeinheit (106) den vorgeschlagenen Flugplan sofort zur weiteren Überprüfung weiterleitet und ein Flugplanweiterleitungssignal an einen Fluglotsen ausgibt, wenn die Analyse des vorgeschlagenen Flugplans und der Risikofaktordaten zu einer Risikometrik führt, die oberhalb einer Genehmigungsschwelle und unterhalb einer Ablehnungsschwelle liegt.

2. Flugsteuerungssystem (101) nach Anspruch 1, wobei die Flugplandatenbank (108) einen Hochrisikofaktorspeicherbereich (110) umfasst, in dem Hochrisikofaktordaten gespeichert sind.

3. Flugsteuerungssystem (101) nach einem der Ansprüche 1 und 2, wobei die Flugplandatenbank (108) einen Niedrigrisikofaktorspeicherbereich (114) umfasst, in dem Niedrigrisikofaktordaten gespeichert sind.

4. Flugsteuerungssystem (101) nach einem der Ansprüche 1 bis 3, wobei die Flugplandatenbank (108) einen Zwischenrisikofaktorspeicherbereich (112) umfasst, in dem Zwischenrisikofaktordaten gespeichert sind.

5. Flugsteuerungssystem (101) nach einem der Ansprüche 1 bis 4, wobei in der Flugplandatenbank (108) die Risikofaktordaten einschließlich Fähigkeitsdaten des UAV (102) gespeichert sind.

6. Flugsteuerungssystem (101) nach Anspruch 5, wobei die Fähigkeitsdaten in einer Spezifikationskennung des UAV gespeichert sind und wobei die Fähigkeitsdaten durch das Flugplananalysesystem aus der Spezifikationskennung empfangen werden.

7. Flugsteuerungssystem (101) nach Anspruch 6, wobei die Spezifikationskennung in Form eines Tags vorliegt, wie etwa eines Nahfeldkommunikations-Tags (NFC-Tag), eines Bluetoothfähigen Tags und/oder eines RFID-Tags.

8. Flugsteuerungssystem (101) nach einem der Ansprüche 1 bis 7, wobei die Flugplandatenbank (108) einen Flugplanspeicherbereich (116) umfasst, in dem frühere vorgeschlagene Flugoptionen gespeichert sind, die mit früheren Flugplanentscheidungen korreliert sind.

9. Flugsteuerungssystem (101) nach Anspruch 8, wobei Fähigkeitsdaten des UAV (102) in dem Flugplanspeicherbereich (116) gespeichert sind.

10. Flugplananalyseverfahren, das eine Flugplanentscheidung bezüglich eines vorgeschlagenen Flugplans für ein unbemanntes Luftfahrzeug (UAV) (102) bestimmt, wobei das Flugplananalyseverfahren Folgendes umfasst:
Speichern von Risikofaktordaten in einer Flugplandatenbank (108);
kommunikatives Koppeln einer Flugplananalyseeinheit (106) mit der Flugplandatenbank (108);
Empfangen eines vorgeschlagenen Flugplans für das UAV (102) durch die Flugplananalyseeinheit (106) aus einer getrennten Flugplaneingabevorrichtung (104);
Analysieren des vorgeschlagenen Flugplans und der Risikofaktordaten durch die Flugplananalyseeinheit (106); und
Bestimmen der Flugplanentscheidung durch die Flugplananalyseeinheit (106) basierend auf dem Analysieren, wobei
das Bestimmen Folgendes umfasst:
sofortiges Genehmigen des vorgeschlagenen Flugplans und Ausgeben eines Flugplangenehmigungssignals an die Flugplaneingabevorrichtung (104), wenn die Analyse zu einer Risikometrik führt, die unterhalb einer Genehmigungsschwelle liegt,
sofortiges Ablehnen des vorgeschlagenen Flugplans und Ausgeben eines Flugplanablehnungssignals an die Flugplaneingabevorrichtung (104), wenn die Analyse zu einer Risikometrik führt, die oberhalb einer Ablehnungsschwelle liegt, und
sofortiges Weiterleiten des vorgeschlagenen Flugplans zur weiteren Überprüfung und Ausgeben eines Flugplanweiterleitungssignals an einen Fluglotsen, wenn die Analyse des vorgeschlagenen Flugplans und der Risikofaktordaten zu einer Risikometrik führt, die oberhalb einer Genehmigungsschwelle und unterhalb einer Ablehnungsschwelle liegt.

11. Flugplananalyseverfahren nach Anspruch 10, wobei das Speichern das Speichern von Hochrisikofaktordaten in einem Hochrisikofaktorspeicherbereich (110) der Flugplandatenbank (108) umfasst.

12. Flugplananalyseverfahren nach einem der Ansprüche 10 und 11, wobei das Speichern das Speichern von Niedrigrisikodaten in einem Niedrigrisikodatenspeicherbereich (114) der Flugplandatenbank (108) umfasst.

13. Flugplananalyseverfahren nach einem der Ansprüche 10 bis 12, wobei das Speichern das Speichern von Fähigkeitsdaten des UAV (102) umfasst.

14. Flugplananalyseverfahren nach einem der Ansprüche 10 bis 13, ferner umfassend das Speichern früherer vorgeschlagener Flugoptionen, die mit früheren Flugplanentscheidungen korreliert sind, in der Flugplandatenbank.

15. Flugplananalyseverfahren nach einem der Ansprüche 10 bis 14, wobei das Speichern das Speichern von Zwischenrisikofaktordaten in einem Zwischenrisikofaktorspeicherbereich (112) der Flugplandatenbank (108) umfasst.

## Revendications

1. Système de contrôle de vol (101), comprenant :
un aéronef sans pilote (UAV, unmanned aerial vehicle) (102),
un dispositif de soumission de plan de vol (104), et
un système d'analyse de plan de vol (100), distinct du dispositif de soumission de plan de vol (104) et conçu pour déterminer une décision de plan de vol concernant un plan de vol proposé relativement à l'UAV (102), le système d'analyse de plan de vol (100) comprenant :
une base de données de plan de vol (108) renfermant des données de facteur de risque, et
une unité d'analyse de plan de vol (106) couplée de manière à communiquer avec la base de données de plan de vol (108), ladite unité d'analyse de plan de vol (106) recevant un plan de vol proposé relativement à l'UAV (102) en provenance du dispositif de soumission de plan de vol (104), et déterminant la décision de plan de vol compte tenu d'une analyse du plan de vol proposé et des données de facteur de risque, étant entendu que
l'unité d'analyse de plan de vol (106) approuve immédiatement le plan de vol proposé et émet un signal d'approbation de plan de vol en direction du dispositif de soumission de plan de vol (104) lorsque l'analyse du plan de vol proposé et des données de facteur de risque donne lieu à un indicateur de risque qui est inférieur à seuil d'approbation,
l'unité d'analyse de plan de vol (106) rejette immédiatement le plan de vol proposé et émet un signal de rejet de plan de vol en direction du dispositif de soumission de plan de vol (104) lorsque l'analyse du plan de vol proposé et des données de facteur de risque donne lieu à un indicateur de risque qui est supérieur à un seuil de rejet, et
l'unité d'analyse de plan de vol (106) renvoie immédiatement le plan de vol proposé à une révision ultérieure et émet un signal de renvoi de plan de vol à destination d'un contrôleur de trafic aérien lorsque l'analyse du plan de vol proposé et des données de facteur de risque donne lieu à un indicateur de risque qui est supérieur à un seuil d'approbation et inférieur à un seuil de rejet.

2. Système de contrôle de vol (101) selon la revendication 1, dans lequel la base de données de plan de vol (108) comporte une zone d'enregistrement de hauts facteurs de risque (110) renfermant des données de hauts facteurs de risque.

3. Système de contrôle de vol (101) selon l'une quelconque des revendications 1 et 2, dans lequel la base de données de plan de vol (108) comporte une zone d'enregistrement de faibles facteurs de risque (114) renfermant des données de faibles facteurs de risque.

4. Système de contrôle de vol (101) selon l'une quelconque des revendications 1 à 3, dans lequel la base de données de plan de vol (108) comporte une zone d'enregistrement de facteurs de risque moyens (112) renfermant des données de facteurs de risque moyens.

5. Système de contrôle de vol (101) selon l'une quelconque des revendications 1 à 4, dans lequel la base de données de plan de vol (108) renferme les données de facteur de risque dont des données de capacités de l'UAV (102).

6. Système de contrôle de vol (101) selon la revendication 5, dans lequel les données de capacités sont enregistrées dans un identificateur de caractéristiques techniques de l'UAV, et dans lequel les données de capacités sont reçues en provenance de l'identificateur de caractéristiques techniques par le système d'analyse de plan de vol.

7. Système de contrôle de vol (101) selon la revendication 6, dans lequel l'identificateur de caractéristiques techniques est sous la forme d'une étiquette, telle qu'une étiquette CCP (communication en champ proche), une étiquette à capacité Bluetooth et/ou une étiquette RFID.

8. Système de contrôle de vol (101) selon l'une quelconque des revendications 1 à 7, dans lequel la base de données de plan de vol (108) comporte une zone d'enregistrement de plan de vol (116) renfermant des options de vol proposées précédentes corrélées à des décisions de plan de vol précédentes.

9. Système de contrôle de vol (101) selon la revendication 8, dans lequel les données de capacités de l'UAV (102) sont enregistrées dans la une zone d'enregistrement de plan de vol (116).

10. Procédé d'analyse de plan de vol déterminant une décision de plan de vol concernant un plan de vol proposé relativement à un aéronef sans pilote (UAV, unmanned aerial vehicle) (102), le procédé d'analyse de plan de vol comprenant :
l'enregistrement de données de facteur de risque dans une base de données de plan de vol (108),
le couplage en communication d'une unité d'analyse de plan de vol (106) à la base de données de plan de vol (108),
la réception, en provenance d'un dispositif de soumission de plan de vol (104) distinct, par l'unité d'analyse de plan de vol (106), d'un plan de vol proposé relativement à l'UAV (102),
l'analyse, par l'unité d'analyse de plan de vol (106), du plan de vol proposé et des données de facteur de risque, et
la détermination, par l'unité d'analyse de plan de vol (106), de la décision de plan de vol compte tenu de ladite analyse ;
ladite détermination comprenant :
l'approbation immédiate du plan de vol proposé et l'émission d'un signal d'approbation de plan de vol en direction du dispositif de soumission de plan de vol (104) lorsque l'analyse donne lieu à un indicateur de risque qui est inférieur à seuil d'approbation,
le rejet immédiat du plan de vol proposé et l'émission d'un signal de rejet de plan de vol en direction du dispositif de soumission de plan de vol (104) lorsque l'analyse donne lieu à un indicateur de risque qui est supérieur à un seuil de rejet, et
le renvoi immédiat du plan de vol proposé à une révision ultérieure et l'émission d'un signal de renvoi de plan de vol à destination d'un contrôleur de trafic aérien lorsque l'analyse du plan de vol proposé et des données de facteur de risque donne lieu à un indicateur de risque qui est supérieur à un seuil d'approbation et inférieur à un seuil de rejet.

11. Procédé d'analyse de plan de vol selon la revendication 10, dans lequel l'enregistrement comprend l'enregistrement de données de hauts facteurs de risque dans une zone d'enregistrement de hauts facteurs de risque (110) de la base de données de plan de vol (108).

12. Procédé d'analyse de plan de vol selon l'une quelconque des revendications 10 et 11, dans lequel l'enregistrement comprend l'enregistrement de données de faibles facteurs de risque dans une zone d'enregistrement de faibles facteurs de risque (114) de la base de données de plan de vol (108).

13. Procédé d'analyse de plan de vol selon l'une quelconque des revendications 10 à 12, dans lequel l'enregistrement comprend l'enregistrement de données de capacités de l'UAV (102).

14. Procédé d'analyse de plan de vol selon l'une quelconque des revendications 10 à 13, comprenant en outre l'enregistrement d'options de vol proposées précédentes corrélées à des décisions de plan de vol précédentes dans la base de données de plan de vol.

15. Procédé d'analyse de plan de vol selon l'une quelconque des revendications 10 à 14, dans lequel l'enregistrement comprend l'enregistrement de données de facteurs de risque moyens dans une zone d'enregistrement de facteurs de risque moyens (112) de la base de données de plan de vol (108).
